# EUROPÄISCHE PATENTSCHRIFT

(11) **EP 3 157 652 B1**
(45) Veröffentlichungstag und Bekanntmachung des Hinweises auf die Patenterteilung: **17.06.2020**
(21) Anmeldenummer: 15729473.7
(22) Anmeldetag: 17.06.2015
(51) Int. Cl.: B01D 46/00, B01D 46/10, B01D 46/52, B01D 50/00

(54) **FILTER UND FILTEREINSATZ**
FILTER AND FILTER CARTRIDGE
FILTRE ET CARTOUCHE FILTRANTE

(30) Priorität: 18.06.2014 DE 202014004894 U; 18.06.2014 DE 202014004897 U; 11.11.2014 DE 202014008899 U
(43) Veröffentlichungstag der Anmeldung: 26.04.2017
(73) Patentinhaber: Mann+Hummel GmbH, 71636 Ludwigsburg (DE)
(72) Erfinder: KAUFMANN, Michael, 67149 Meckenheim (DE); RUHLAND, Klaus-Dieter, 67149 Meckenheim (DE)
(74) Vertreter: Seyboth, Matthias
(86) Internationale Anmeldenummer: PCT/EP2015/063542
(87) Internationale Veröffentlichungsnummer: WO 2015/193346

(56) Entgegenhaltungen:
- WO-A1-2009/106590
- WO-A1-2009/106593
- WO-A1-2010/019797
- WO-A2-2011/115973
- DE-U1-202006 007 073
- GB-A- 2 092 296
- US-A- 5 853 445
- US-A1- 2001 003 893
- US-A1- 2002 150 805
- US-B1- 6 348 077

## Beschreibung

### Technisches Gebiet

Die vorliegende Erfindung betrifft einen Filter, insbesondere für Brennkraftmaschinen, zur Filterung eines Fluids, insbesondere von Luft sowie einen Filtereinsatz, insbesondere für einen solchen Filter.

### Stand der Technik

WO 201/019797 A1 zeigt ein rundes, gewickeltes Filterelement. GB 2 092 296 A zeigt ein keilförmiges Filterelement. Insbesondere bei Bau- und Landmaschinen gewinnt die Motorluftfiltration zunehmend an Bedeutung. Zum einen werden immer leistungsfähigere Luftfilter eingesetzt, da höhere Motorleistungen und strengere Emissionsrichtlinien einen erhöhten Luftdurchsatz durch den Motor erfordern. Zum anderen vergrößert sich Anzahl an Baugruppen, die standardmäßig verbaut werden, wie etwa Klimaanlagen. Dies verringert den zur Verfügung stehenden Bauraum im Fahrzeug. Schließlich besteht das Bestreben, Fahrzeuge kleiner und leichter zu gestalten, was ebenfalls zu Lasten des zur Verfügung stehenden Bauraums geht.

Bei einem Einsatz in Bau- oder Landmaschinen werden in unterschiedlichen Betriebszuständen Vibrationen auf den Filter übertragen. Es ist deshalb ein vorrangiges Ziel, den Hauptfiltereinsatz vibrationsfest im Filter anzuordnen. Aber auch bei einem stromabwärts angeordneten Sekundärfiltereinsatz ist während des Betriebs ein sicherer Sitz bedeutsam.

Es ist eine Aufgabe der Erfindung, einen Filter, insbesondere für Brennkraftmaschinen, zur Filterung eines Fluids, insbesondere von Luft, anzugeben, der auch unter extremen Einsatzbedingung eine hohe Zuverlässigkeit aufweist.

Bei den genannten Einsatzbereichen ist es notwendig, die Gesamtkonstruktion eines Filtereinsatzes so robust wie möglich zu gestalten. Vordringlich ist ein Schutz des Filtermediums im Betrieb. Bei der Auslegung derartige Filtereinsätze ist auch auf etwaige Handhabungsgewohnheiten bei einem Wechsel des Filtereinsatzes oder bei einer Wartung Rücksicht zu nehmen.

Es ist somit eine weitere Aufgabe der Erfindung, einen Filtereinsatz anzugeben, der auch bei extremen Einsatzbedingungen und Handhabungsgewohnheiten eine zuverlässige Filterfunktion gewährleistet.

Für Einsatz in Fahrzeugen, die wenig Bauraum für Filtrationszwecke bieten, werden im Allgemeinen sogenannte Kompaktluftfilter eingesetzt, die inline durchströmbar sind. Dies bedeutet, dass die Anströmrichtung und die Abströmrichtung parallel verlaufen und im Wesentlichen miteinander fluchten. Oftmals muss die aus dem Luftfilter abströmende Luft je nach Anwendungsfall nach dem Durchströmen des Filters umgelenkt werden. Hierzu kann beispielsweise ein Rohrkrümmer dem Filtergehäuse nachgeschaltet sein. Derartige nachgeschaltete Bauteile erhöhen jedoch wiederum den Bauraumbedarf der gesamten Anordnung.

Es ist eine weitere Aufgabe der Erfindung, einen Filter, insbesondere für Brennkraftmaschinen, zur Filterung eines Fluids, insbesondere von Luft, anzugeben, der bei vergleichbarer Filterleistung weniger Bauraum beansprucht.

Die oben genannten Aufgaben werden jeweils durch verschiedene Aspekte der im Folgenden beschriebenen Ausführungsformen eines Filters, insbesondere für Brennkraftmaschinen, zur Filterung eines Fluids, insbesondere von Luft sowie eines Filtereinsatzes, insbesondere für einen solchen Filter gelöst. Die verschiedenen Aspekte können wie aus den Ausführungsbeispielen ersichtlich einzeln oder kombiniert vorteilhaft in Ausführungsformen enthalten sein, wobei bei Kombination einzelne Aspekte die Vorteile anderer Aspekte unterstützen und ein synergistisches Zusammenwirken zu einem vorteilhaften Produkt führt.

### Offenbarung der Erfindung

Die Aufgabe wird durch einen Filtereinsatz für einen Filter zur Filterung eines Fluids, insbesondere von Luft, insbesondere für eine Brennkraftmaschine gemäß Anspruch 1 gelöst. Weitere Ausgestaltungen der Erfindung sind in den Unteransprüchen angegeben.

Der erfindungsgemäße Filtereinsatz weist einen als Filterbalg ausgebildeten Filterkörper sowie einen den Filterkörper tragenden Filtereinsatzrahmen auf. Der Filterbalg weißt äußere Faltkanten, die auf der Anströmfläche liegen, und innere Faltkanten, die den äußeren Faltkanten gegenüber und auf der Abströmfläche liegen, auf, wobei die Abströmfläche gegenüber der Anströmfläche geneigt ist. Der Filtereinsatzrahmen weist im Bereich der Abströmfläche eine Dichtung zur Trennung eines Filterinnenraums eines Filter in Reinseite und Rohseite und im Bereich der Anströmfläche einen außen um den Filterrahmen umlaufenden Kantenschutz auf. Der Kantenschutz verbindet den Filterkörper und den Filtereinsatzrahmen miteinander. Erfindungsgemäß ergibt sich somit ein synergistisches Zusammenwirken aus Kantenschutz und der Verbindung des Filterkörpers mit dem Filtereinsatzrahmen. Dies ist besonders vorteilhaft bei der gängigen Praxis im Baumaschinensektor, Filtereinsätze durch Ausblasen oder Ausklopfen ab zu reinigen.

In einer Ausführungsform weist der Filtereinsatz eine Abstandsstruktur zur Festlegung eines Abstands zwischen dem Filtereinsatzrahmen und einem in Hauptströmungsrichtung stromabwärts anordenbaren weiteren Filtereinsatz auf. Mittels der Abstandstruktur wird ein vorher festgelegter Abstand zwischen Filtereinsatz, der beispielsweise ein Hauptfiltereinsatz sein kann, und einem stromabwärts angeordneten weiteren Filtereinsatz, der beispielsweise ein Sekundärfiltereinsatz sein kann, auch unter extremen Einsatzbedingungen wie beispielsweise Vibrationen aufrechterhalten. Dies sorgt dafür, dass der weitere Filtereinsatz sich nicht aus seiner vorgesehenen Position heraus bewegen und damit seine Dichtfunktion und Sicherungsfunktion verlieren kann.

Bei einer Ausgestaltung der Erfindung ist vorgesehen, dass die Abstandsstruktur innerhalb der Dichtung, insbesondere mehrfach entlang der Dichtung und insbesondere am Umfang der Abströmfläche angeordnet ist. Bei einer solchen Ausgestaltung kann es vorgesehen sein, dass der Außenumfang senkrecht zur Hauptströmungsrichtung des weiteren Filtereinsatzes in Form und Größe der Dichtung folgt und somit eine Abstützfläche für die Abstandsstruktur bietet.

Eine vorteilhafte Ausführung der Erfindung sieht vor, dass die Abströmfläche oder/und eine Dichtfläche der Dichtung mit der Hauptströmungsrichtung einen Winkel zwischen 5° und 45°, insbesondere einen Winkel von 24°±10° und insbesondere einen Winkel von 24°±5° einschließt. Eine derart zur Hauptströmungsrichtung gewinkelte Abströmfläche besitzt eine größere Fläche als die Abströmfläche. Generell bietet die Abwicklung der Abströmfläche oder/und der Dichtfläche die Möglichkeit, bereits eine Umlenkung der Hauptströmungsrichtung innerhalb des Filtereinsatzes oder direkt nachfolgend dem Filtereinsatz vorzunehmen. Dies spart Bauraum und verbessert aufgrund kürzerer Strömungsstrecken den Druckverlust innerhalb des Filters.

Vorteilhafterweise ist die Abstandsstruktur integral mit der Dichtung ausgebildet, insbesondere in die Dichtung eingeformt. Dies ermöglicht beispielsweise die Verwendung des gleichen Materials und die Herstellung der Abstandsstruktur im gleichen Arbeitsschritt wie die Dichtung.

Eine besonders bevorzugte Ausführungsform sieht vor, dass die Abstandsstruktur dazu ausgelegt ist, im eingebauten Zustand des Filtereinsatzes eine Spann- oder Haltekraft auf einen in Hauptströmungsrichtung stromabwärts anordenbaren weiteren Filtereinsatz, insbesondere einen Sekundärfiltereinsatz, auszuüben, wobei die Kraft den weiteren Filtereinsatz in seine Einbauposition drückt. Dies kann beispielsweise dadurch erreicht werden, dass die Abstandsstruktur aus einem elastischen Material hergestellt ist. Wird der Filtereinsatz dann nach dem weiteren Filtereinsatz eingesetzt, kann durch die geeignete Wahl einer entsprechenden Geometrie bereits das Einsetzen eine Kraft auf den weiteren Filtereinsatz ausüben. Dies verbessert wiederum die Zuverlässigkeit des Filters, da der weitere Filtereinsatz dauerhaft einer Kraft ausgesetzt ist, die ihn an seinem vorgesehenen Platz hält.

Bei einer bevorzugten Ausgestaltung der Erfindung wirkt die Dichtung axial in Richtung der Hauptströmungsrichtung. Dies bedeutet, dass die zur Abdichtung aufzubringende Kraft parallel zur Abströmungsrichtung verläuft.

Bei einer Ausführungsform der Erfindung ist der Filterkörper als Filterbalg mit variabler Faltenhöhe, ausgebildet. Mittels der variablen Faltenhöhe kann beispielsweise eine schräg zur Hauptströmungsrichtung verlaufende Abströmfläche realisiert werden. Als variable Faltenhöhe wird ein Aufbau eines zickzackförmig gefalteten Filterkörpers verstanden, bei welchem die Faltenhöhen über eine durch die Aneinanderreihung von Faltkanten definierte Länge des Faltenbalges nicht konstant ist, sondern sich kontinuierlich oder diskontinuierlich ändert oder in benachbarten Abschnitten unterscheidet. Bevorzugt ändert sich die Höhe der Falten kontinuierlich und weiter bevorzugt linear über die Länge des Balges.

Die Aufgabe wird auch durch einen Filter zur Filterung eines Fluids, insbesondere von Luft, insbesondere für eine Brennkraftmaschine gelöst. Der erfindungsgemäße Filter weist ein Filtergehäuse auf, in den ein Hauptfiltereinsatz und ein Sekundärfiltereinsatz einsetzbar sind. Der Hauptfiltereinsatz weist eine Anströmfläche, eine Abströmfläche sowie eine Hauptströmungsrichtung, einen Filterkörper und einen den Filterkörper tragenden Filtereinsatzrahmen auf. Der Sekundärfiltereinsatz ist stromabwärts des Hauptfiltereinsatzes anordenbar. Der Filtereinsatzrahmen weist im Bereich der Abströmfläche eine Dichtung zur Trennung des Filtergehäuses in Reinseite und Rohseite sowie eine Abstandsstruktur zur Festlegung eines Abstands zwischen dem Filtereinsatzrahmen und dem Sekundärfiltereinsatz auf.

Bei einer erfindungsgemäßen Ausführungsform des Filters ist vorgesehen, dass das Filtergehäuse eine Einführrichtung aufweist, die im Wesentlichen senkrecht zur Hauptströmungsrichtung liegt. Dies ermöglicht nach dem Einsetzen des Sekundärfiltereinsatzes ein Einsetzen des Hauptfiltereinsatzes derart, dass der Sekundärfiltereinsatz gegen ein Herausbewegen aus seinem vorgesehenen Sitz blockiert ist.

Bei einer bevorzugten Ausführungsform ist vorgesehen, dass der Sekundärfiltereinsatz eine Dichtung zur Anlage an dem Filtergehäuse aufweist, wobei die Dichtung insbesondere radial zur Durchströmungsrichtung des Sekundärfiltereinsatzes wirkend ausgelegt ist. Es ist somit nicht notwendig, in axialer Verlängerung zur Hauptdurchströmungsrichtung des Sekundärfiltereinsatzes am Filtergehäuse eine Dichtfläche vorzusehen. Vielmehr wirkt die Dichtung senkrecht zur Hauptdurchströmungsrichtung gegen das Filtergehäuse bereits beim Einsetzen in den vorgesehenen Sitz.

Gemäß einer Ausführungsform der Erfindung weist der Sekundärfiltereinsatz einen Sekundärfilterkörper und einen den Sekundärfilterkörper tragenden Sekundärfiltereinsatzrahmen auf. Dabei kann es vorgesehen sein, dass im eingesetzten Zustand des Hauptfiltereinsatzes und des Sekundärfiltereinsatzes die Abstandsstruktur des Hauptfiltereinsatzes die Dichtung oder den Sekundärfiltereinsatzrahmen des Sekundärfiltereinsatzes kontaktiert. Somit ist bei im Einsatzfall auftretenden Vibrationen ein Herausbewegen des Sekundärfiltereinsatzes nicht möglich, da die Abstandsstruktur des Hauptfiltereinsatzes den Raum, über den der Sekundärfiltereinsatz eingesetzt wurde, blockiert.

Der Filtereinsatz weist eine Anströmfläche, eine Abströmfläche, eine Hauptströmungsrichtung, einen Filterkörper sowie einen den Filterkörper tragenden Filtereinsatzrahmen auf. Der Filtereinsatzrahmen weist im Bereich der Abströmfläche eine Dichtung zur Trennung eines Filterinnenraums eines Filter in Reinseite und Rohseite und im Bereich der Anströmfläche einen außen um den Filterrahmen umlaufenden Kantenschutz auf. Der Kantenschutz verbindet den Filterkörper und den Filtereinsatzrahmen miteinander. Erfindungsgemäß ergibt sich somit ein synergistisches Zusammenwirken aus Kantenschutz und der Verbindung des Filterkörpers mit dem Filtereinsatzrahmen. Dies ist besonders vorteilhaft bei der gängigen Praxis im Baumaschinensektor, Filtereinsätze durch Ausblasen oder Ausklopfen ab zu reinigen.

Der Kantenschutz bildet eine für das zu filternde Fluid dichte Verbindung zwischen Filterkörper und Filtereinsatzrahmen. Somit bildet die Verbindung aus Filterkörper und Filtereinsatzrahmen gleichzeitig die Abdichtung des Filterkörpers gegenüber dem Filtereinsatzrahmen.

Bei einer erfindungsgemäßen Weiterbildung der Erfindung ist vorgesehen, dass der Filtereinsatzrahmen im Bereich des Kantenschutzes Ausnehmungen aufweist, die von dem Kantenschutz ausgefüllt sind. Dies ermöglicht eine besonders gute mechanische Verbindung zwischen dem Kantenschutz und dem Filtereinsatzrahmen.

Besonders bevorzugt erstrecken sich die Ausnehmungen senkrecht zur Hauptströmungsrichtung. Es ist somit nicht notwendig, in dem Filtereinsatzrahmen eine Abwicklung für den Kantenschutz vorzusehen. Vielmehr kann der Kantenschutz vollständig um die anströmungsseitigen Kanten des Filtereinsatzrahmens herum liegen und gleichzeitig den Filtereinsatzrahmen durch die Ausnehmungen durchdringen und so eine besonders mechanisch stabile Verbindung einzugehen.

Bei einer Ausgestaltung der Erfindung umgibt der Filtereinsatzrahmen den Filterkörper. Zusätzlich bestimmt der Filtereinsatzrahmen die Hauptströmungsrichtung des Filtereinsatzes.

Eine besonders bevorzugte Ausführungsform der Erfindung sieht vor, dass der Kantenschutz den Filterkörper teilweise durchdringt. Somit ergibt sich nach dem Aushärten des Kantenschutzes eine besonders stabile Verbindung zwischen dem Kantenschutz und dem Filtereinsatzrahmen einerseits und dem Filtereinsatzrahmen und dem Filterkörper andererseits.

Die Erfindung sieht vor, dass der Filterkörper als Filterbalg, insbesondere mit variabler Faltenhöhe, ausgebildet ist. Die variable Faltenhöhe ermöglicht eine Abwinklung zwischen Abströmfläche und Hauptströmungsrichtung.

Erfindungsgemäß kann vorgesehen sein, dass die Abströmfläche oder/und eine Dichtfläche der Dichtung mit der Hauptströmungsrichtung einen Winkel zwischen 5° und 45°, insbesondere einen Winkel von 24°±10° und insbesondere einen Winkel von 24°±5° einschließt. Der Winkel zwischen Hauptströmungsrichtung und Abströmfläche oder Dichtfläche erlaubt eine besonders kompakte Bauweise, da eine Umlenkung der Hauptausrichtung bereits innerhalb eines den Filtereinsatz aufnehmenden Filtergehäuses erfolgen kann.

Eine besonders bevorzugte Weiterbildung der Erfindung sieht vor, dass die Verbindung zwischen Filterkörper und Filtereinsatzrahmen eine Verklebung ist, die einteilig mit dem Kantenschutz ausgebildet ist. Insbesondere können die Verklebung und der Kantenschutz aus dem gleichen Material, insbesondere aus einem Polyurethan, gebildet sein. Dies ermöglicht insbesondere bei der Herstellung technische Vorteile, da die Verklebung zwischen dem Filtereinsatzrahmen und dem Filterkörper, die Abdichtung zwischen Filterkörper und Filtereinsatzrahmen und der Kantenschutz in einem Arbeitsschritt hergestellt werden können und gleichzeitig eine besonders robuste Ausführungsform entsteht.

Erfindungsgemäß ist der Kantenschutz so ausgelegt, dass die bei einem Ausklopfen des Filtereinsatzes auftretenden Kräfte durch den Kantenschutz zumindest teilweise aufgenommen werden können und insbesondere eine Beschädigung des Filtereinsatzes verhindert werden kann.

Der erfindungsgemäße Filtereinsatz weist bevorzugt eine prismatische Grundform auf, wobei die parallel zueinander angeordneten Grundfläche und Deckfläche eine polygone Grundform aufweisen. Der Filtereinsatz weist entsprechend der polygonen Grundform der Grund- und Deckflächen zumindest drei, bevorzugt vier Mantelflächen auf. Eine erste Mantelfläche ist benachbart einer zweiten Mantelfläche. Die erste Mantelfläche ist Anströmfläche. Alternativ ist die erste Mantelfläche Abströmfläche. Die erste Mantelfläche und die zweite Mantelfläche stehen in Wesentlichen zueinander senkrecht. Mit im Wesentlichen ist ein Winkelbereich von 80° bis 100° umfasst. Eine dritte Mantelfläche liegt der ersten Mantelfläche bevorzugt im Wesentlichen gegenüber bzw. ist von dieser in Durchströmungsrichtung beabstandet und ist im Gegensatz zu der ersten Mantelfläche eine Abströmfläche, wenn die erste Mantelfläche Anströmfläche ist oder die dritte Mantelfläche ist eine Anströmfläche, wenn die erste Mantelfläche Abströmfläche ist. Die dritte Mantelfläche schließt mit der ersten Mantelfläche einen Winkel ein, der kleiner 80° und größer 10° ist und sich insbesondere zwischen 70° und 20° befindet. Besonders bevorzugt sind Winkel wie 45° oder 60°.

Im Folgenden wird die oben erwähnte erste Alternative beschrieben, bei der die erste Mantelfläche Anströmfläche ist und die dritte Mantelfläche Abströmfläche ist. Die Ausführungen geltend entsprechend für den umgekehrten Fall der zweiten Alternative, bei dem die erste Mantelfläche Abströmfläche und die dritte Mantelfläche Anströmfläche sind. Bei der beschriebenen Filtereinsatzgeometrie ergibt sich in der Regel eine Mantelfläche als Anströmfläche, die zuerst von dem Hauptfluidstrom getroffen wird. Die zweite Mantelfläche unterstützt das Eintreten des Fluids in den Filtereinsatz und vergrößert die Anströmfläche. Über die dritte Mantelfläche strömt das Fluid ab. Dadurch, dass die dritte Mantelfläche zur ersten Mantelfläche geneigt ist, ergibt sich für einen Filter mit einem solchen Filtereinsatz die Möglichkeit, die Abströmrichtung bereits innerhalb des Filtergehäuses in der gewünschten Art festzulegen. Eine externe Umlenkung außerhalb des Filtergehäuses beispielsweise mittels eines gekrümmten Abströmstutzens ist nicht mehr notwendig. Es werden somit zwei Vorteile erzielt. Einerseits ergibt sich eine deutlich vergrößerte Anströmfläche, welche eine unter Umständen bessere Ausnutzung der Filterkapazität ermöglicht. Gleichzeitig erlaubt die erfindungsgemäße Filtergeometrie eine Umlenkung der Hauptströmungsrichtung innerhalb des Filtereinsatzes, wodurch der durch den Filter beanspruchte Bauraum optimiert, das heißt verkleinert werden kann.

Als Hauptströmungsrichtung wird die gemittelte Richtung der Strömung an einer Position des Weges durch das Filtersystem und/oder Filterelement verstanden. Beispielsweise ist die Hauptströmungsrichtung innerhalb eines Zyklonblocks aus einer Vielzahl von Inline-Zyklonzellen definiert durch die axiale Erstreckung der Zyklonzellen. Beim Auftreffen auf die Anströmfläche eines Filterelements wird die Hauptströmungsrichtig im Wesentlichen senkrecht zu dieser Anströmfläche stehen und im Übrigen durch den Weg des geringsten Widerstandes definiert.

Gemäß einer Ausführungsform ist die polygone Grundform ein Dreieck, ein Viereck oder ein Fünfeck. Die sich ergebende prismatische Grundform kann je nach Anwendungsfall auch leicht gewölbte Mantelflächen aufweisen. Zudem kann auch eine Anströmung oder Abströmung über die Grund- und/oder Deckfläche des Prismas erfolgen.

Eine bevorzugte Weiterbildung der Erfindung sieht vor, dass der Filtereinsatz einen Filterkörper mit einem zickzackförmig gefalteten Filtermedium aufweist. Ein derart gefaltetes Filtermedium besitzt eine hohe Oberfläche und lässt sich verhältnismäßig kostengünstig in die gewünschte Grundform bringen.

Eine Ausgestaltung sieht vor, dass die Falten äußere Faltkanten aufweisen, die auf der ersten Mantelfläche liegen und den äußeren Faltkanten gegenüberliegende innere Faltkanten aufweisen, die auf der dritten Mantelfläche liegen. Es erfolgt somit eine Anströmung des Filtereinsatzes im Wesentlichen senkrecht zu den Faltkanten. Gleiches gilt für die Abströmung, wobei die dritte Mantelfläche gegenüber der ersten Mantelfläche geneigt ist.

Bei der beschriebenen zickzackförmigen Faltung des Filtermediums weisen die Falten zumindest eine Stirnseite auf, die auf der zweiten Mantelfläche zu liegen kommt. Es erfolgt somit die Anströmung des Filtermediums sowohl über die Faltkante als auch über die Stirnseite der Falte. Die Stirnseiten müssen in diesem Fall so ausgestaltet sein, dass keine direkte Zuströmung zur Reinseite des Filtereinsatzes erfolgen kann.

Eine besonders bevorzugte Ausführungsform der Erfindung sieht vor, dass sich die Tiefe benachbarter Faltkanten unterscheidet und insbesondere jede zweite Falte die gleiche Tiefe aufweist. Die unterschiedliche Tiefe benachbarter Faltkanten ermöglicht eine Anschrägung des Filtereinsatzes und so die Ausbildung der gewünschten Geometrie.

Eine besonders bevorzugte Ausführungsform der Erfindung sieht vor, dass die Falten je zwei Stirnseiten aufweisen. Eine Stirnseite der Falten liegt auf der zweiten Mantelfläche. Die andere Stirnseite der Falten liegt auf einer vierten Mantelfläche. Die zweite Mantelfläche ist größer als die vierte Mantelfläche. Die vierte Mantelfläche weist mehr Faltkanten auf als die zweite Mantelfläche, insbesondere doppelt so viele. Durch die Verdopplung der Faltkanten an der vierten Mantelfläche ist es möglich, den Winkel zwischen der dritten Mantelfläche und der ersten Mantelfläche her- und einzustellen.

Der Erfindungsgedanke findet auch Niederschlag in einem Filter mit einem erfindungsgemäßen Filter-einsatz. In einem solchen Filter kann vorgesehen sein, dass die Hauptanströmrichtung des Filters und die Hauptabströmrichtung des Filters einen Winkel von mehr als 30°, insbesondere mehr als 45° bevorzugt mehr als 60° und insbesondere 90° einschließen.

Alternativ kann vorgesehen sein, dass die Hauptanströmrichtung des Filters zur Hauptabströmrichtung des Filters parallel und versetzt ist. Aufgrund der durch den Filtereinsatz realisierten Schrägheit der Abströmfläche des Filtereinsatzes zur Anströmfläche des Filtereinsatzes kann innerhalb des Filters eine Umlenkung der Hauptanströmrichtung auf die Hauptabströmrichtung dergestalt erfolgen, dass die Hauptabströmrichtung einen Winkel mit der Hauptanströmrichtung einschließt oder um eine bestimmte Länge versetzt ist. Dies lässt sich einfach und kostengünstig durch entsprechende Ausströmöffnungen an dem Filter realisieren.

Eine ebenfalls vorteilhafte Weiterentwicklung der Erfindung sieht einen Filter mit einem erfindungsgemäßen Primärfilterelement und erfindungsgemäßen Sekundärfilterelement vor. Durch die Ausgestaltung von Primär- und Sekundärfiltereinsatz mit einer prismatischen Grundform entsteht eine besonders große Freiheit der Umlenkung der Fluidströme in einem derartigen Filter.

Der erfindungsgemäße Filter, insbesondere für Brennkraftmaschinen, zur Filterung eines Fluids, insbesondere von Luft, weist ein Filtergehäuse mit einem rohseitigen Bereich und einem reinseitigen Bereich auf. In das Filtergehäuse ist ein Hauptfilterelement einsetzbar, das eine Hauptfilterelement-Anströmfläche, eine Hauptfilterelement-Strömungsrichtung, eine Hauptfilterelement-Abströmfläche sowie eine auf einer Dichtfläche angeordnete Dichtung aufweist. Beispielsweise kann das Hauptfilterelement eine prismatische Grundform aufweisen. Insbesondere kann eine Durchströmung der Mantelflächen erfolgen. Die Dichtung dient zur fluiddichten Trennung des rohseitigen Bereichs des Filtergehäuses von dem reinseitigen Bereich des Filtergehäuses. Ferner weist der Filter ein stromabwärts des Hauptfilterelements angeordnetes Sekundärfilterelement mit einer Sekundärfilterelement-Anströmfläche, einer Sekundärfilterelement-Strömungsrichtung und einer Sekundärfilterelement-Abströmfläche auf. Die Dichtfläche ist schräg zur Hauptströmungsrichtung des Hauptfilterelements angeordnet. Die schräge Dichtfläche eröffnet innerhalb des Filtergehäuses stromabwärts des Hauptfilterelements einen Raum, in dem einerseits das Sekundärfilterelement angeordnet sein kann. Gleichzeitig wird durch die zur Hauptströmungsrichtung schrägstehende Dichtfläche bereits im Filtergehäuse eine Umlenkung der Hauptströmungsrichtung vorgenommen. Somit kann bei geeigneter Anbringung einer Abströmöffnung an dem Filtergehäuse eine Umlenkung des Fluidstroms in die gewünschte Richtung erfolgen. Es kann auf ansonsten notwendige Rohrkrümmer oder dergleichen nach dem Gehäuse verzichtet werden.

Die Dichtfläche und die Hauptströmungsrichtung können insbesondere einen Winkel einschließen, der zwischen 85° und 10° liegt. Innerhalb dieses Winkelbereichs stellt sich eine merkbare Umlenkung des Fluidstroms ein.

Eine Ausgestaltung der Erfindung sieht vor, dass die Dichtfläche gekrümmt ist und insbesondere auf einer Zylindermantelfläche liegt. Durch eine von dem Hauptfilterelement aus gesehene konkave Ausgestaltung der Dichtfläche ist der für das Hauptfilterelement zur Verfügung stehende Bauraum optimierbar und bietet bei geeigneter Wahl des Krümmungsradius ausreichend Platz für ein Sekundärelement. Gleichzeitig ist durch die Krümmung der Dichtfläche die Abströmungsrichtung des Filtergehäuses je nach Position der Abströmöffnung besonders einfach festzulegen. Bevorzugt liegt die Achse des Zylinders der Zylindermantelfläche senkrecht zu der Hauptfilterelement-Strömungsrichtung und senkrecht der Sekundärfilterelement-Strömungsrichtung.

Alternativ kann die Dichtfläche in einer Ebene liegen.

Eine bevorzugte Ausgestaltung der Erfindung sieht vor, dass die Dichtfläche und die Hauptfilterelement-Abströmfläche parallel verlaufen. So ergibt sich eine klar definierte Trennebene zwischen der Rohseite und der Reinseite des Filtergehäuses. Gleichzeitig ergibt sich bei einer gekrümmten Ausführung der Dichtungsfläche eine bauraumoptimierte Ausgestaltung des Filterinnenraums und damit des gesamten Filters.

Bevorzugt ist vorgesehen, dass die Sekundärelement-Anströmfläche parallel und beabstandet zu der Dichtfläche verläuft. Somit ist sichergestellt, dass bei einem Wechsel des Sekundärfilterelements die Reinseite des Filtergehäuses nicht verschmutzt wird. Bei einer gekrümmten Ausführung der Dichtfläche ergibt sich eine ebenfalls gekrümmte Sekundärelement-Anströmfläche.

Bei einer bevorzugten Ausgestaltung der Erfindung ist die Grundform des Sekundärfilterelements ein Quader. Dies ermöglicht einen einfachen Aufbau des Sekundärelements, beispielsweise aus einem gerade gefalteten Flachelement, bei welchem die an- und abströmseitigen Faltkanten jeweils Ebenen bilden, die bevorzugt in einem durch die Faltenhöhe definierten Abstand parallel zueinander angeordnet sind.

Alternativ kann die Grundform des Sekundärelements ein Prisma mit einer oder mehreren gekrümmten Mantelflächen sein wie beispielsweise ein Hohlzylindermantelabschnitt. Dies kann beispielsweise durch einen gekrümmten Flachbalg realisiert werden. Diese Form bietet die Möglichkeit, das Sekundärfilterelement an eine gekrümmte Hauptfilterelement-Abströmfläche anzupassen und so den Bauraum weiter zu optimieren.

In einer bevorzugten Ausführungsform der Erfindung ist die Grundform des Hauptfilterelements ein Prisma. Insbesondere können die Grundfläche und die Deckfläche des Prismas ein Viereck oder ein Fünfeck sein. Das Viereck oder das Fünfeck kann zwei oder drei rechte Winkel, einen spitzen und einen stumpfen Winkel aufweisen. Eine bevorzugte Ausführungsform der Erfindung sieht vor, dass eine Mantelseite des Prismas von außen gesehen konvex gekrümmt ist, sodass sich eine beispielsweise als Zylindermantelfläche ausgebildete Hauptfilterelement-Abströmfläche ergibt.

Eine vorteilhafte Ausführungsform der Erfindung sieht vor, dass das Hauptfilterelement ein Faltenbalg mit zumindest zwei verschiedenen Faltentiefen ist. Mittels zweier verschiedener Faltentiefen kann die zur Hauptströmungsrichtung des Hauptfilterelements geneigte Hauptfilterelement-Abströmfläche an den Faltenstirnseiten realisiert werden. Alternativ kann durch eine kontinuierlich ansteigende Faltenhöhe die zur Abströmungsrichtung des Hauptfilterelements geneigte Hauptfilterelement-Abströmflache an den Faltenkanten realisiert werden. Die Begriffe Faltentiefe und Faltenhöhe werden hier synonym verwendet.

Eine vorteilhafte Ausgestaltung der Erfindung sieht vor, dass das Filtergehäuse eine Anströmrichtung, eine Abströmrichtung sowie einen Abströmbereich mit einer Abströmöffnung aufweist. An den Abströmbereich ist ein Abströmstutzen befestigbar, wobei der Abströmbereich eine Befestigungsfläche für den Abströmstutzen aufweist und die Befestigungsfläche mit der Hauptfilterelement-Strömungsrichtung einen Winkel von 45° einschließt. Die um 45° zur Hauptströmungsrichtung geneigte Befestigungsfläche befindet sich besonders bevorzugt so am Filtergehäuse angeordnet, dass sie in Hauptfilterelement-Strömungsrichtung gesehen innerhalb des Filtergehäuses liegt, das heißt, sie überragt dieses nicht. Gleichzeitig befindet sich diese Befestigungsfläche senkrecht zur Hauptströmungsrichtung des Hauptfilterelements, also beispielsweise in einer Einführrichtung des Hauptfilterelements gesehen unterhalb des Hauptfilterelements. Ein an dieser Befestigungsfläche angebrachter Abströmstutzen kann nun das abströmende gefilterte Fluid vergleichsweise einfach in beliebige Richtungen verteilen.

Eine besonders bevorzugte Ausführungsform der Erfindung sieht vor, dass der Abströmstutzen so geformt ist, dass sich eine Umlenkung der Strömungsrichtung um 45° ergibt. Auf diese Weise ist lediglich die Orientierung des Abströmstutzens an dem Abströmbereich, insbesondere an der Befestigungsfläche, hinsichtlich der sich endgültig ergebenden Abströmrichtung relevant. Dies ermöglicht in besonders vorteilhafter Weise die Festlegung der Abströmrichtung des gefilterten Fluids mit einem einzigen Bauteil, nämlich dem Abströmstutzen. Durch geeignete Orientierung des Abströmstutzens an der Befestigungsfläche ergibt sich die endgültige Abströmrichtung des Filtergehäuses.

Eine bevorzugte Weiterentwicklung der Erfindung sieht vor, dass der Abströmstutzen einen rotationssymmetrisch ausgebildeten Befestigungsbereich zur Befestigung an der Befestigungsfläche des Filtergehäuses aufweist. Somit kann durch Drehung des Abströmstutzens die endgültige Festlegung der Abströmrichtung des gesamten Filtergehäuses festgelegt werden. Es ergibt sich somit zwischen der Anströmrichtung des Filtergehäuses und der Abströmrichtung des Filtergehäuses ein Winkelbereich zwischen 0° und 90° mit ein und denselben Bauteilen.

In gleicher Weise kann festgelegt sein, dass die Abströmrichtung und die Befestigungsfläche einen Winkel von 45° einschließen.

Eine alternative Weiterentwicklung des Erfindungsgedankens sieht vor, dass die Befestigungsfläche auf einer Zylindermantelfläche liegt. Die Achse des Zylinders liegt dabei vorzugsweise senkrecht zur Hauptströmungsrichtung des Hauptfilterelements. Eine derart gekrümmte Befestigungsfläche ist vorzugsweise mit einem entsprechend gekrümmten Befestigungsbereich eines Abströmstutzens kombiniert. Die Position des Abströmstutzens an dem Abströmbereich legt dann die Abströmrichtung des Filtergehäuses fest. Vorzugsweise verlaufen die Befestigungsfläche und die Sekundärelement-Abströmfläche parallel. Dies ermöglicht eine extrem hohe Integration und damit Bauraumoptimierung.

Erfindungsgemäß kann bei einer Ausführungsform vorgesehen sein, dass das Hauptfilterelement entlang einer Einführachse in das Filtergehäuse einsetzbar und entnehmbar ist, wobei die Einführachse mit der Hauptströmungsrichtung einen Winkel zwischen 90° und dem Winkel einschließt, den die Dichtfläche und die Hauptströmungsrichtung einschließen. Gemäß dieser Ausführungsform weist das Filtergehäuse einen Deckel auf, der so ausgebildet ist, dass er im in das Filtergehäuse verschließenden Zustand auf das Hauptfilterelement eine Kraft in Richtung der Dichtfläche ausübt. Durch die Schrägstellung der Dichtfläche wird diese Kraft zumindest teilweise in eine Axialkraft umgewandelt, das heißt in eine Kraft, die in Richtung der Haupströmungsrichtung wirkt. Dies ergibt eine Kraft, die das Hauptfilterelement mit seiner an der Dichtfläche angebrachten Dichtung gegen einen Hauptfilterelementsitz am Filtergehäuse drückt.

### Kurze Beschreibung der Zeichnungen

Die Erfindung wird nun unter Bezugnahme auf die Zeichnungen näher erläutert. Es zeigen:
- Figur 1: eine perspektivische Schnittansicht einer Ausführungsform eines erfindungsgemäßen Filters mit eingesetztem Hauptfiltereinsatz und Sekundärfiltereinsatz;
- Figur 2: den Filter der Figur 1 ohne eingesetztem Sekundärfiltereinsatz;
- Figur 3: den Filter der Figur 1 ohne eingesetztem Hauptfiltereinsatz;
- Figur 4: den Filter der Figur 1 in einer Querschnittsansicht;
- Figur 5: eine perspektivische Außenansicht des erfindungsgemäßen Filters der Figur 1;
- Figur 6: eine perspektivische Ansicht eines erfindungsgemäßen Sekundärfiltereinsatzes mit Filterkörper;
- Figur 6a: eine perspektivische Ansicht eines alternativen erfindungsgemäßen Sekundärfiltereinsatz-Filterkörpers;
- Figuren 7 und 8: perspektivische Ansichten des Sekundärfiltereinsatzes der Figur 6 ohne Filterkörper;
- Figur 9: eine perspektivische Schnittansicht des Filters der Figur 6;
- Figur 10: eine Schnittansicht des Filters der Figur 7;
- Figur 11: eine perspektivische Vorderansicht eines erfindungsgemäßen Hauptfiltereinsatzes;
- Figur 12: eine perspektivische Rückansicht des Hauptfiltereinsatzes der Figur 11;
- Figur 13: eine perspektivische Schnittansicht des Hauptfiltereinsatzes der Figur 11;
- Figur 14: eine perspektivische Rückansicht des Hauptfiltereinsatzes der Figur 11 ohne Kantenschutz;
- Figuren 15 und 16: perspektivische Außenansicht des Filters der Figur 5 mit unterschiedlichen Stellungen des Abströmstutzens;
- Figur 17: eine Seitenansicht des Filters der Figur 5;
- Figur 18: eine Seitenansicht des Filters der Figur 15; und
- Figur 19: eine Seitenansicht des Filters der Figur 16.

### Ausführungsform(en) der Erfindung

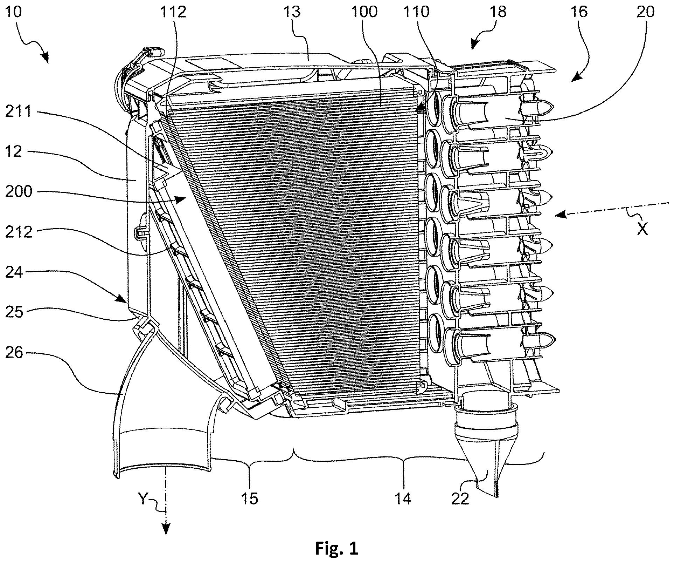

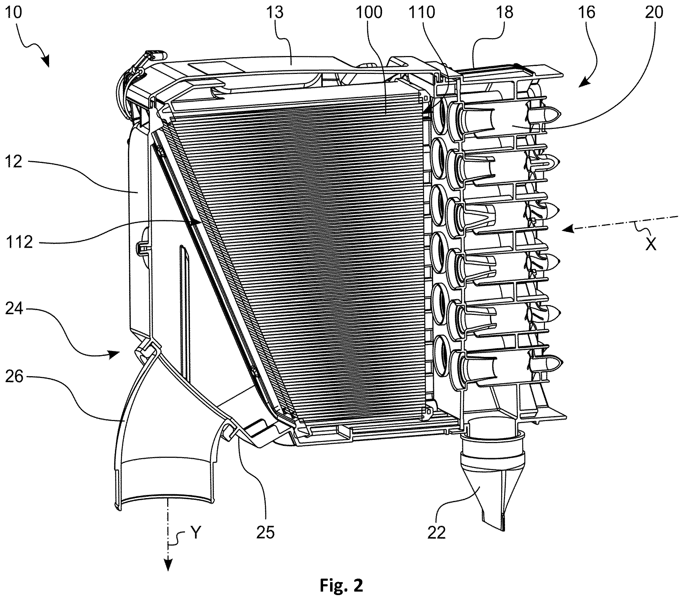

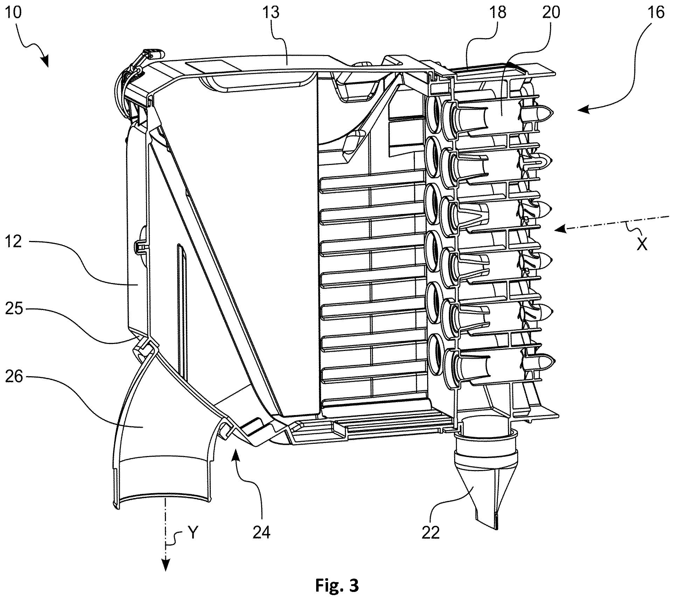

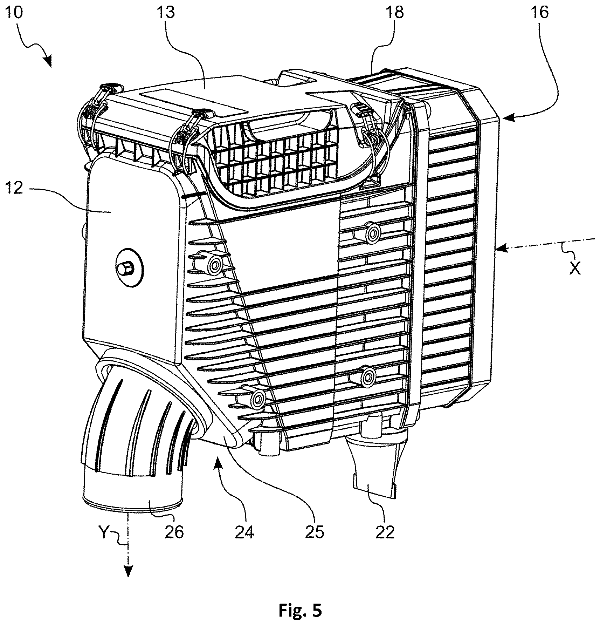

Es wird nun unter Bezugnahme auf die Figuren 1 bis 5 eine Ausführungsform eines erfindungsgemäßen Filters 10 beschrieben. Ein solcher Filter 10 kann beispielsweise in einem Luftansaugtrakt einer Bau- oder Landmaschine, eines Kompressors oder eines sonstigen Geräts mit einer Brennkraftmaschine zur Filterung eines Fluids, insbesondere von Luft, eingesetzt werden. Der Filter 10 weist ein Filtergehäuse 12 auf, das sich grob in einen rohseitigen 14 Bereich und einen reinseitigen Bereich 16 aufgliedern lässt.

Der Filter 100 wird entlang einer Hauptanströmrichtung X durchströmt. Auf einer Anströmseite 16 trifft das zu filternde Fluid auf ein Grob- oder Vorabscheidermodul 18, das vorliegend als Zyklonblock ausgebildet ist. In dem Zyklonblock 18 sind eine Vielzahl einzelner Vorabscheiderzellen 20 in einem sogenannten Multi-Zyklonblock parallel geschaltet. In dem Zyklonblock 18 vorabgeschiedener Staub und/oder Wasser wird durch einen Austragsstutzen 22 aus dem Filtergehäuse 12 entfernt.

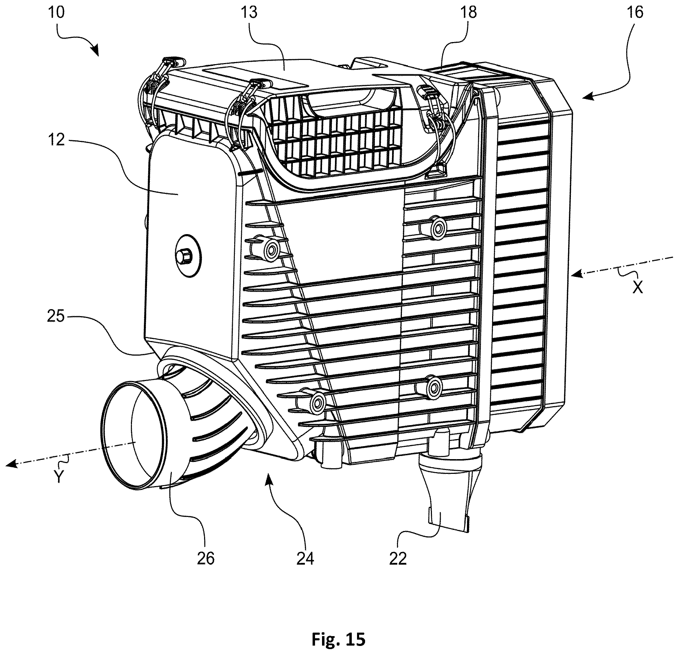

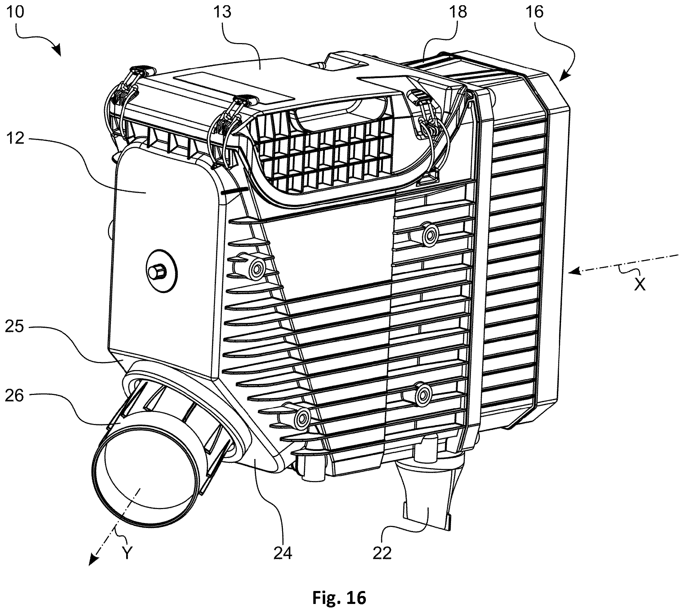

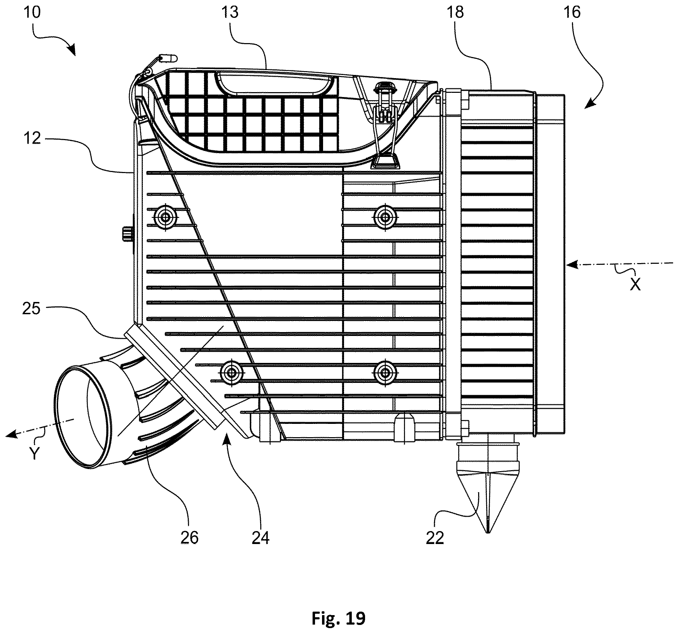

Nach dem Zyklonblock 18 gelangt das zu filternde Fluid in den Hauptfiltereinsatz 100. Der Hauptfilter-einsatz 100 ist vorliegend prismatisch ausgebildet. Eine Anströmfläche 110 des Hauptfiltereinsatzes 100 liegt nicht parallel zu einer Abströmfläche 112 des Hauptfiltereinsatzes 100. Vielmehr schließen die Anströmfläche 110 und die Abströmfläche 112 einen Winkel ein. Vorliegend ist die Anströmfläche 110 des Hauptfiltereinsatzes 100 hinsichtlich ihrer angestrebten Fläche kleiner als die Abströmfläche 112 des Hauptfiltereinsatzes 100. Abströmseitig des Hauptfiltereinsatzes 100 ist in dem Filtergehäuse 12 ein Sekundärfiltereinsatz 200 vorgesehen. Eine Hauptanströmfläche 210 des Sekundärfilterelements 200 ist auf die Abströmfläche 112 des Hauptfiltereinsatzes 100 ausgerichtet und insbesondere parallel zu dieser angeordnet. Eine Abströmfläche 212 ist in dieser Ausführungsform parallel zu der Hauptanströmfläche 210 des Sekundärfiltereinsatzes 200 ausgerichtet. Aufgrund der Neigung der Abströmfläche 112 des Hauptfiltereinsatzes 100 findet bereits bei der Anströmung des Fluids aus dem Hauptfiltereinsatz 100, aber auch bei der Anströmung aus dem Sekundärfiltereinsatz 200 eine Ablenkung der Hauptströmungsrichtung X statt. Durch die Abströmungsgeometrie des Filtergehäuses 12 im Abströmbereich 24 wird das strömende Fluid auf die Abströmungsrichtung Y um- und zu einem Abströmstutzen 26 gelenkt. Vorliegend ist die Hauptabströmungsrichtung Y im Wesentlichen senkrecht zur Hauptanströmungsrichtung X. Es sind aber auch andere Abströmungsrichtungen denkbar. Dies wird insbesondere im Zusammenhang mit den Figuren 15 bis 19 näher erläutert.

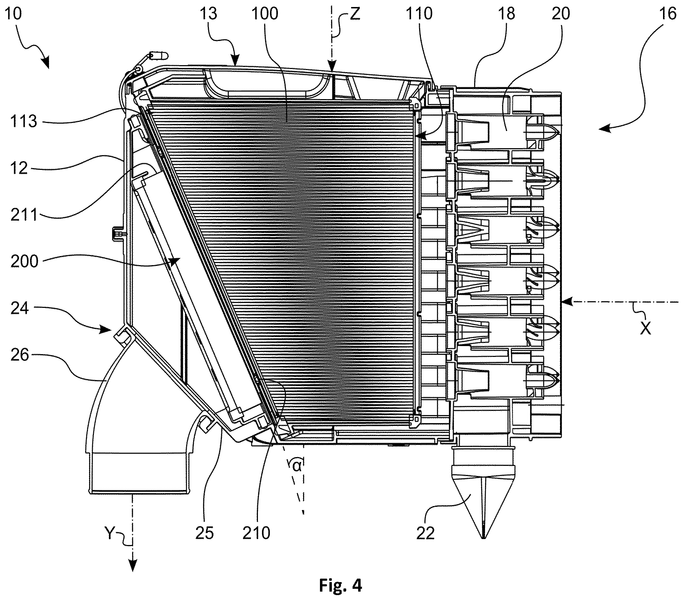

Der Hauptfiltereinsatz 100 weist eine Hauptfiltereinsatz-Anströmfläche 110, eine Hauptfiltereinsatz-Strömungsrichtung X1, eine Hauptfiltereinsatz-Abströmfläche 112 sowie eine auf einer Dichtfläche 114 angeordnete Dichtung 116 zur fluiddichten Trennung des rohseitigen Bereichs 14 und des reinseitigen Bereichs 16 des Filtergehäuses 12 auf. Stromabwärts des Hauptfiltereinsatzes 100 ist ein Sekundärfiltereinsatz 200 mit einer Sekundärfiltereinsatz-Anströmfläche 210, einer Sekundärfiltereinsatz-Strömungsrichtung Y1 und einer Sekundärfiltereinsatz-Abströmfläche 212 angeordnet. Die Dichtfläche 114 des Hauptfiltereinsatzes 100 ist schräg zur Hauptströmungsrichtung Y1 des Hauptfiltereinsatzes 100 angeordnet. Insbesondere ist die Dichtfläche 114 unter einem Winkel α angeordnet, der bevorzugt zwischen 5° und 45° beträgt (siehe Figur 4), Insbesondere beträgt der Winkel 24°±10° und 24°±5°. In der vorliegenden Ausführungsform beträgt der Winkel α 24° (siehe Figur 4).

Die Sekundärfiltereinsatz-Anströmfläche 210 verläuft im Wesentlichen parallel und beabstandet zu der Dichtfläche 114 des Hauptfiltereinsatzes 100. Der Abstand beträgt weniger als 2 cm, in der vorliegenden Ausführungsform beträgt der Abstand 1 cm.

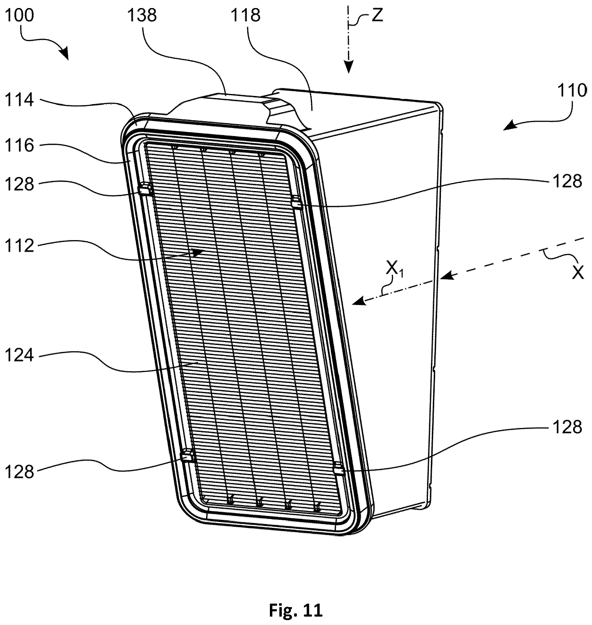

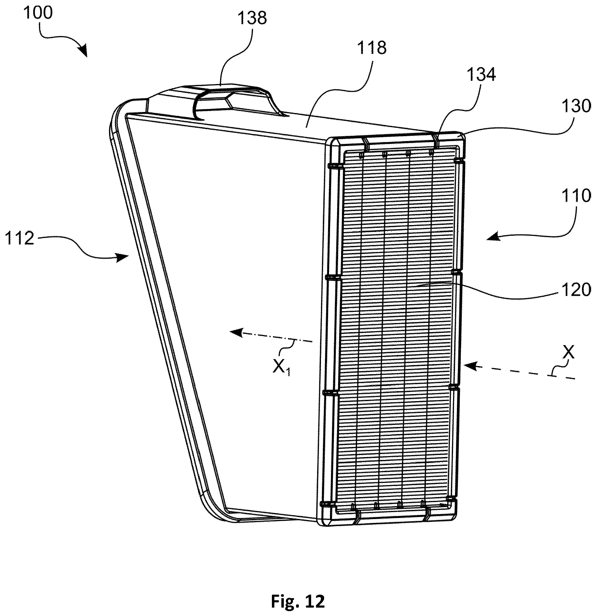

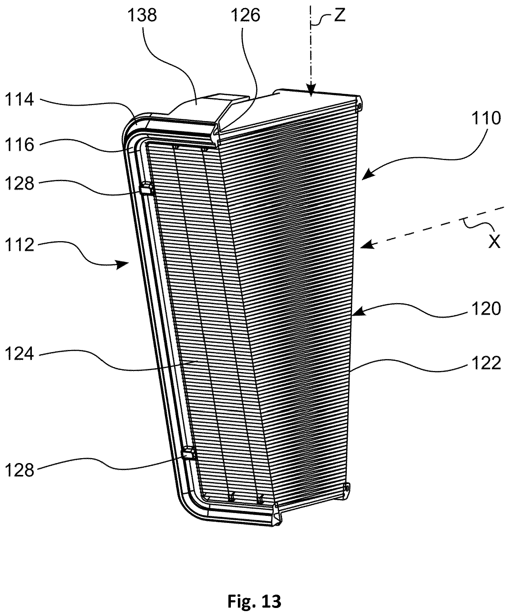

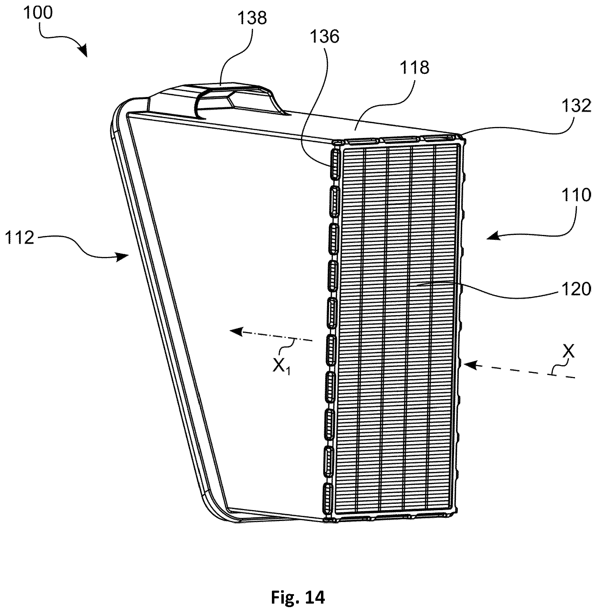

Die Figuren 11 bis 14 zeigen den Hauptfiltereinsatz 100. Der Hauptfiltereinsatz 100 weist eine Anströmfläche 110 und eine Abströmfläche 112 auf. Der Hauptfiltereinsatz 100 wird entlang einer Hauptanströmungsrichtung X angeströmt und entlang einer Hauptdurchströmungsrichtung X1 durchströmt. Der Hauptfiltereinsatz 100 weist einen Filtereinsatzrahmen 118 auf, der einen Filterkörper 120 aufnimmt. Der Filterkörper 120 ist vorliegend als Faltenbalg ausgebildet. Anströmseitige Faltkanten 122 liegen gegenüber abströmseitigen Faltkanten 124. Anströmseitige Faltkanten 122 und abströmseitige Faltkanten 124 liegen parallel, im Wesentlichen senkrecht zur Hauptdurchströmungsrichtung X1 und in den Figuren 11 bis 14 im Wesentlichen waagrecht. Diese Orientierung der Faltkanten 122, 124 erlaubt eine Variation der Faltentiefe in Richtung einer Einführrichtung Z. Entlang der Einführrichtung Z ist der Hauptfiltereinsatz 100 in das Filtergehäuse 12 des Filters 10 einführbar. In dem vorliegenden Ausführungsbeispiel verringert sich die Faltenhöhe entlang der Einführrichtung Z. Dies bewirkt eine Verkippung der Anströmfläche 110 gegenüber der Abströmfläche 112.

Im Bereich der Abströmfläche 110 weist der Filterrahmen 118 eine Dichtfläche 114 auf, entlang der eine umlaufende Dichtung 116 vorgesehen ist. Die Dichtung dient zur Trennung des rohseitigen Bereichs 14 von dem reinseitigen Bereich 16 in dem Filtergehäuse 12 des Filters 10, wenn der Hauptfiltereinsatz 100 in den Filter 10 eingesetzt ist. Die Dichtung 112 weist im Wesentlichen im Querschnitt eine U-Form auf.

Zur Verstärkung und besseren mechanischen Anbindung der Dichtung 116 an den Filterrahmen 118 ist ein Steg 126 vorgesehen, der in die U-Form der Dichtung 116 eingreift. Gleichzeitig kann die Dichtung 116 den Filterkörper 120 kontaktieren oder durchdringen, so dass gleichzeitig eine Verklebung des Filterkörpers 120 mit dem Filtereinsatzrahmen 118 und eine fluiddichte Abdichtung zwischen Filterkörper 120 und Filtereinsatzrahmen 118 entsteht.

Des Weiteren weist die Dichtung 116 eine vorliegend als Abstütznoppen 128 ausgebildete Abstandsstruktur auf. Die Abstütznoppen 128 sind Bestandteil des Dichtungsmaterials der Dichtung 116. Wie aus der Querschnittsansicht der Figur 4 erkennbar ist, kontaktieren die Abstütznoppen 128 den Sekundärfiltereinsatz 200, insbesondere einen Sekundärfiltereinsatzrahmen, wenn Hauptfiltereinsatz 100 und Sekundärfiltereinsatz 200 in dem Filtergehäuse 12 des Filters 10 eingesetzt sind. In diesem Zustand kann der Sekundärfiltereinsatz 200 auch bei einer Vibrationsanregung, die beispielsweise durch das Filtergehäuse 12 übertragen werden kann, sich nicht aus einem Dichtsitz im Filtergehäuse 12 bewegen. Außerdem wird durch die Abstütznoppen 128 sichergestellt, dass der Sekundärfiltereinsatz 200 nach dem Einbau des Hauptfiltereinsatzes 100 und dem Verschließen des Deckels 13 an der richtigen Position im Filtergehäuse 12 sitzt.

Die Abstütznoppen 128 sind die mehrfach entlang der Dichtung 116 an der der Abströmfläche 112 zugewandten Seite angeordnet. Sie können beispielsweise integral mit der Dichtung 116 bei der Herstellung der Dichtung 116 hergestellt werden.

Die Dichtung 116 befindet sich an der Abströmfläche 112 des Hauptfiltereinsatzes 100 und wirkt in eine Richtung, die senkrecht zur Abströmfläche 112 liegt, also im Wesentlichen axial entlang der Hauptdurchströmungsrichtung X1.

Der Hauptfiltereinsatz 100 weist an seiner Anströmseite 110 einen außen um den Filterrahmen 118 umlaufenden Kantenschutz 130 auf. Der Kantenschutz 130 ist so ausgelegt, dass bei einem Ausklopfen des Hauptfiltereinsatzes 100 beispielsweise zum Abreinigen Schläge gegen den Filterrahmen 118 aufgenommen und zumindest teilweise abgefedert werden können. So kann ein Brechen des Filterrahmens 118 oder eine anderweitige Beschädigung des Filtereinsatzes 100, beispielsweise des Filterkörpers 120, vermieden werden. Der Kantenschutz 130 läuft um die anströmseitige Kante des Filterelements 118 um. Dabei können einzelne Unterbrechungen, wie beispielsweise die Einkerbungen 134 vorgesehen sein. Die Einkerbungen 134 entstehen bei der Herstellung des Kantenschutzes 130. Dabei liegt der Filterrahmen 118 samt Filterkörper 120 in einer Gussschale. Stege halten dabei einen Abstand zwischen dem Gussschalenboden und dem Filterkörper 118 und lassen dabei die Einkerbungen 134 während des Gussvorgangs entstehen.

An der anströmseitigen Kante 132 sind Ausnehmungen 136 vorgesehen. Die Ausnehmungen 136 durchbrechen die Seitenwände des Filterrahmens 118 und erstrecken sich somit senkrecht zur Hauptdurchströmungsrichtung X1. Während des bereits erwähnten Gussvorgangs durchdringt das Gussmaterial für den Kantenschutz 130 die Ausnehmungen 136, kontaktiert die Innenwände des Filtereinsatzrahmens 118 und insbesondere den Filterkörper 120. Es entsteht damit eine fluiddichte Abdichtung zwischen dem Filterkörper 120 und dem Filtereinsatzrahmen 118 und gleichzeitig eine Verklebung der beiden Bauteile. Es ist somit der Kantenschutz 130 einteilig mit der Verklebung zwischen dem Filterkörper 120 und dem Filtereinsatzrahmen 118 und einer ebenfalls notwendigen Abdichtung zwischen den beiden Bauteilen hergestellt. Der Kantenschutz 130 kann beispielsweise aus einem schäumbaren Polyurethan hergestellt sein. Es sind aber auch silikonbasierte Materialsysteme denkbar.

Der Filtereinsatz 100 weist einen Griff 138 auf. Der Griff 138 wirkt mit dem Deckel 13 des Filters 10 zusammen und sorgt für einen sicheren Sitz des Hauptfiltereinsatzes 100 in dem Filtergehäuse 12 und übt gleichzeitig einen axial in Richtung der Hauptströmungsrichtung X1 gerichteten Druck auf die Dichtung 116 aus und sorgt somit für einen festen Dichtsitz des Hauptfiltereinsatzes 100 in dem Filtergehäuse 12.

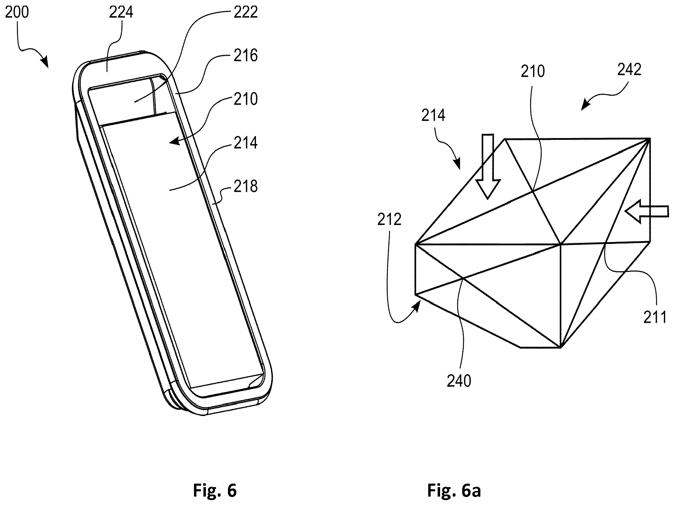

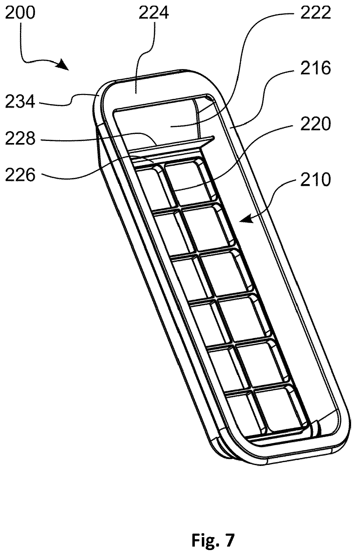

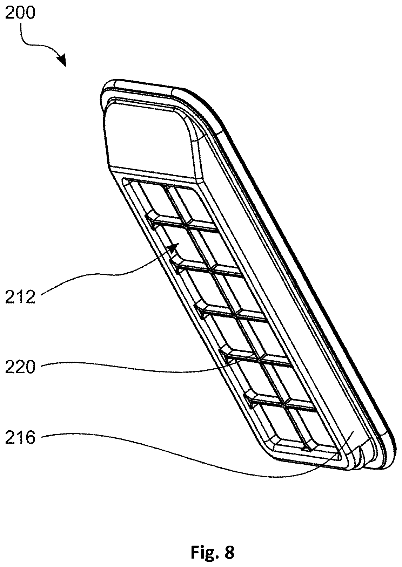

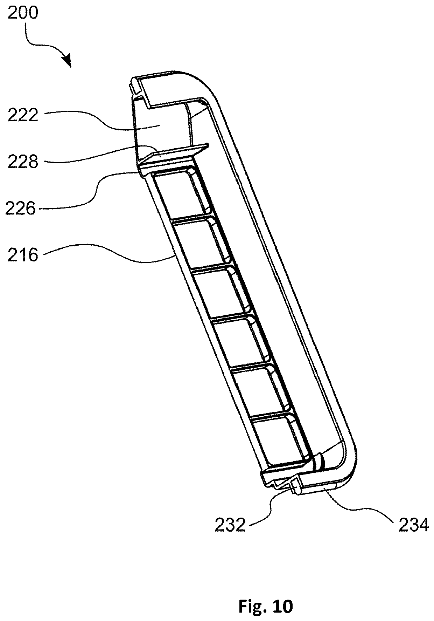

Die Figuren 6 bis 10 zeigen eine Ausführungsform eines Sekundärfiltereinsatzes 200. Der Sekundärfiltereinsatz 200 weist eine Hauptanströmfläche 210, eine Abströmfläche 212 sowie eine Hauptdurchströmungsrichtung Y1 auf. Ferner weist der Sekundärfiltereinsatz 200 einen Filterkörper 214 auf, der von einem Filtereinsatzrahmen 216 getragen wird. Anströmseitig schließt der Filtereinsatzrahmen 216 mit einem um den Filterkörper 214 umlaufenden Rahmenbereich 218 im Wesentlichen bündig mit dem Filterkörper 214 ab. Der Rahmenbereich 218 kann beispielsweise als Widerlager für die Abstütznoppen 128 des Hauptfiltereinsatzes 100 im eingesetzten Zustand beider Filtereinsätze 100, 200 dienen.

In der vorliegenden Ausführungsform ist der Filterkörper 214 im Wesentlichen quaderförmig. Es sind aber auch andere Grundformen wie etwa ein Prisma denkbar. Abströmseitig, also im Bereich der Abströmfläche 212, ist der Filtereinsatzrahmen 216 mit einer Gitterstruktur 220 versehen. Die Gitterstruktur 220 überdeckt die Abströmfläche 212 zumindest teilweise. Bei einem hohen Differenzdruck zwischen der Anströmseite 210 und der Abströmseite 212 verhindert die Gitterstruktur 220 ein unerwünschtes Durchbiegen oder gar Durchfallen des Filterkörpers 214.

An einer Schmalseite des quaderförmigen Filterkörpers 214 ist der Filtereinsatzrahmen 216 mit einer Griffmulde 222 versehen. Um ein bequemes Greifen in der Griffmulde 222 für die Hand einer Personen zu ermöglichen, die den Sekundärfiltereinsatz 200 wechseln möchte, ist der Rahmenbereich 218 im Bereich der Griffmulde 222 zu einem Griffsteg 224 verbreitert. Die Breite des Griffstegs 224 ist dabei so gewählt, dass ein direktes Anströmen eines die Hauptfiltereinsatz-Abströmfläche 112 verlassendes Fluid zu dem Filterkörper 214 insbesondere an der der Griffmulde 222 zugewandten Seite möglich ist. Dies ist insbesondere auch aus der Querschnittsansicht der Figur 4 gut erkennbar. Auch von der obersten Kante 113 der Hauptfilterelement-Abströmfläche 112 kann ein austretendes Fluids direkt zu dem Filterkörper 214 des Sekundärfiltereinsatzes 200 strömen. Dabei kann das Fluid insbesondere über die Nebenanströmfläche 211 in den Filterkörper 214 eintreten.

In diesem Ausführungsbeispiel ist der Filterkörper 214 als Filterbalg ausgebildet. Die Faltkanten verlaufen dabei parallel zu der Längsachse des Sekundärfiltereinsatzes 200, sodass die Stirnseiten der Falten die Nebenanströmfläche 211 bilden. Die Faltkanten der Falten bilden die Hauptanströmfläche 210 und die Abströmfläche 212. Durch die Kombination aus Griffmulde 222 und über die Nebenanströmfläche 211 seitlich anströmbarem Filterbalg 214 können die Druckverluste an dem Sekundärfiltereinsatz 200 verringert werden, da der Sekundärfiltereinsatz 200 deutlich besser an die Strömungsführung von dem Hauptfiltereinsatz 100 zu dem Abströmstutzen in dem Filtergehäuse 12 angepasst ist. Gleichzeitig erhöht die Gitterstruktur 220 an der Abströmseite 212 die Kollapsfestigkeit des Sekundärfiltereinsatzes 200. Ferner ist über den integrierten Griff an der Griffmulde 222 eine leichte Demontage des Filtereinsatzes 200 möglich.

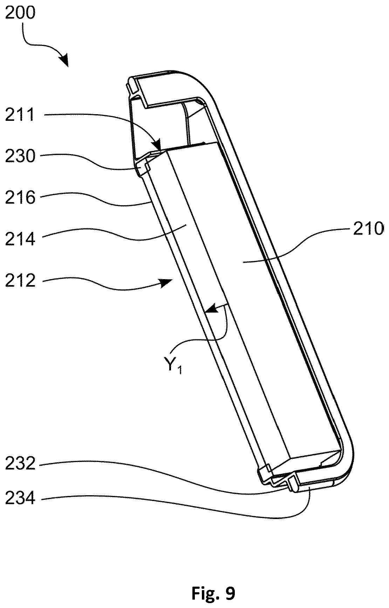

Der Sekundärfiltereinsatz 200 weist einen Filterrahmen 216 auf, der umlaufend um den abströmseitigen Rand des Filterkörpers 214 eine Nut 226 vorsieht. Gleichzeitig ist an der der Griffmulde 222 zugewandten Seite des Filtereinsatzrahmens 216 ein Steg 228 vorgesehen. Die Nut 226 dient als Gussform für eine umlaufende Verklebung und Abdichtung des Filterkörpers 214 mit dem Filtereinsatzrahmen 216. Die Abdichtung und Verklebung wird durch ein Dichtungsmaterial 230 (siehe Figur 9) bewirkt. Das Dichtungsmaterial 230 kann beispielsweise ein schäumendes Polyurethan sein. Es sind aber auch silikonbasierte Materialsysteme denkbar.

Die Nut 226 und zusätzlich der Steg 228 sorgen für eine gute mechanische Ankopplung des Dichtungsmaterials 230 an den Filtereinsatzrahmen 216. Diese Ausgestaltung hat zudem den Vorteil, dass nach dem Einbringen des Dichtungsmaterials 230 in die Nut 226 und dem Einlegen des Filterkörpers 214 in den Filtereinsatzrahmen 216 und einem nachfolgenden Aufschäumen und Aushärten keine weiteren Bearbeitungsschritte wie etwa ein Beschneiden des Dichtungsmaterials 230 notwendig sind. Überschüssiges Material kann teilweise von dem Filterkörper 214 aufgenommen werden oder in den Zwischenbereich zwischen Filterkörper 214 und Filtereinsatzrahmen 216 gelangen, ohne dass dies nachteilig wäre.

Die Tiefe der Nut 226 verläuft im Wesentlichen entlang der Hauptdurchströmungsrichtung Y1 des Sekundärfiltereinsatzes 200. Die abströmseitige Gitterstruktur 222 kann einteilig mit dem Filtereinsatzrahmen 216 ausgebildet sein.

An seinem anströmseitigen Umfang weist der Filtereinsatzrahmen 216 eine Dichtungsaufnahmenut 232 auf. In diese Dichtungsaufnahmenut 232 kann eine beispielsweise aus einem Moosgummi hergestellte Dichtung 234 eingelegt werden. Die Dichtung 234 wirkt somit radial, d.h. senkrecht zur Hauptdurchströmungsrichtung Y1 des Sekundärfiltereinsatzes 200.

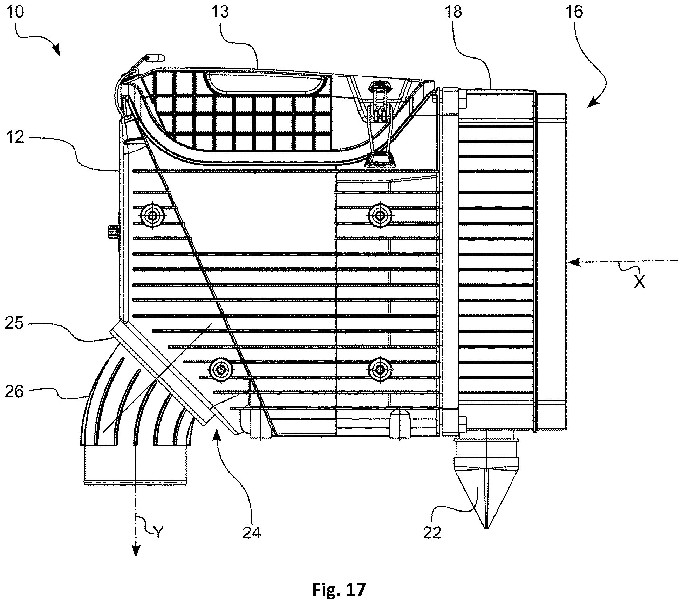

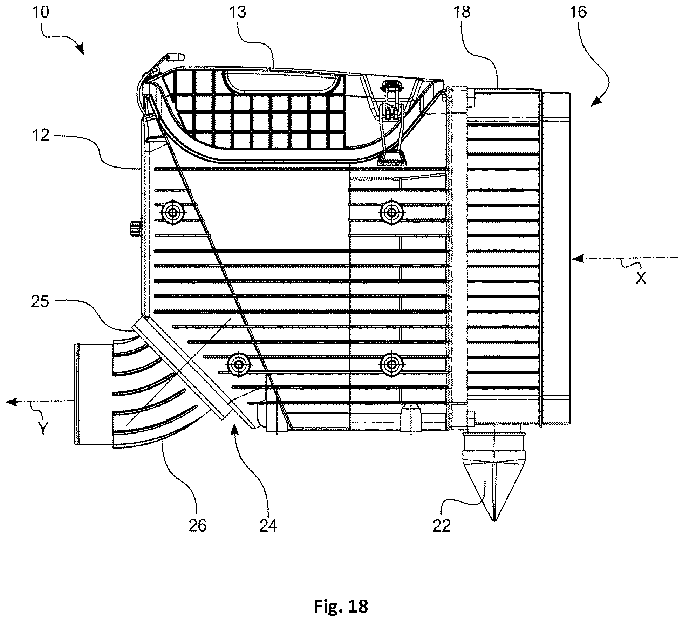

Die Figuren 15 bis 19 zeigen den Filter 10 mit verschiedenen Orientierungen des Abströmstutzens 26. Das Filtergehäuse 12 des Filters 10 weist im Abströmbereich 24 einen Befestigungsbereich 25 auf. Der Befestigungsbereich 25 schließt mit der Hauptanströmrichtung X des Filtergehäuses 12 einen Winkel von ungefähr 45° ein. An den Befestigungsbereich 25 ist der Abströmstutzen 26 befestigbar. Der Abströmstutzen 26 ist so geformt, dass ein durch den Abströmstutzen 26 strömendes Fluid eine Umlenkung von 45° erfährt. Der Abströmstutzen 46 ist vor einem endgültigen Befestigen an der Befestigungsfläche 25 drehbar ansetzbar. Es kann somit erst zu einem sehr späten Zeitpunkt bei der Herstellung des Filters 10 die endgültige Umlenkungsrichtung bzw. Abströmrichtung Y des Filters 10 festgelegt werden. Bei der in dieser Ausführungsform gezeigten Geometrie sind eine Inline-Durchströmung (Figur 15, Figur 18), eine Umlenkung um 90° (Figur 17) sowie dazwischenliegende Winkelbereiche möglich. Bei den zwischen den extremen Winkeln liegenden Winkelbereichen erfolgt eine zusätzlich eine seitliche Ablenkung.

## Patentansprüche

1. Filtereinsatz (100) zur Filterung von Luft, insbesondere für eine Brennkraftmaschine, mit
einer Anströmfläche (110), einer Abströmfläche (112) sowie einer Hauptströmungsrichtung (X), einem als Filterbalg ausgebildeten Filterkörper (120), der äußere Faltkanten aufweist, die auf der Anströmfläche liegen, und den äußeren Faltkanten gegenüberliegende innere Faltkanten aufweist, die auf der Abströmfläche liegen, wobei die Abströmfläche gegenüber der Anströmfläche geneigt ist,
einem den Filterkörper (120) tragenden Filtereinsatzrahmen (118), wobei der Filtereinsatzrahmen (118) im Bereich der Abströmfläche (112) eine Dichtung (116) zur Trennung eines Filterinnenraums eines Filter (10) in Reinseite und Rohseite und
im Bereich der Anströmfläche (110) einen außen um den Filterrahmen (118) umlaufenden Kantenschutz (130) aufweist, wobei der Kantenschutz (130) den Filterkörper (120) und den Filtereinsatzrahmen (118) miteinander verbindet.

2. Filtereinsatz nach Anspruch 1, wobei der Kantenschutz (130) eine für das zu filternde Fluid dichte Verbindung zwischen Filterkörper (120) und Filtereinsatzrahmen (118) bildet.

3. Filtereinsatz nach einem der Ansprüche 1 oder 2, wobei der Filtereinsatzrahmen (118) im Bereich des Kantenschutzes (130) Ausnehmungen (136) aufweist, die von dem Kantenschutz (130) ausgefüllt sind.

4. Filtereinsatz nach Anspruch 3, wobei sich die Ausnehmungen (136) senkrecht zur Hauptströmungsrichtung (X1) erstrecken.

5. Filtereinsatz nach einem der vorhergehenden Ansprüche 1 bis 4, wobei der Filtereinsatzrahmen (118) den Filterkörper (120) umgibt und die Hauptströmungsrichtung (X1) bestimmt.

6. Filtereinsatz nach einem der vorhergehenden Ansprüche 1 bis 5, wobei der Kantenschutz (130) den Filterkörper (120) teilweise durchdringt.

7. Filtereinsatz nach einem der vorhergehenden Ansprüche 1 bis 6, wobei der Filterkörper (120) mit variabler Faltenhöhe ausgebildet ist.

8. Filtereinsatz nach einem der vorhergehenden Ansprüche 1 bis 7, wobei die Abströmfläche (112) oder/und eine Dichtfläche (114) der Dichtung (116) mit der Hauptströmungsrichtung (X1) einen Winkel zwischen 5° und 45°, insbesondere einen Winkel von 24°±10° und insbesondere einen Winkel von 24°±5° einschließt.

9. Filtereinsatz nach einem der vorhergehenden Ansprüche 1 bis 8, wobei die Verbindung zwischen Filterkörper (120) und Filtereinsatzrahmen (118) eine Verklebung ist, die einteilig mit dem Kantenschutz (130) ausgebildet ist.

10. Filtereinsatz nach Anspruch 9, wobei die Verklebung und der Kantenschutz (130) aus dem gleichen Material, insbesondere aus einem Polyurethan, gebildet sind.

11. Filter (10) zur Filterung eines Fluids, insbesondere von Luft, insbesondere für eine Brennkraftmaschine, mit
einem Filtergehäuse (12), in das ein Hauptfiltereinsatz (100) nach einem der vorhergehenden Ansprüche und ein Sekundärfiltereinsatz (200) eingesetzt sind, wobei der Hauptfiltereinsatz (100) eine Anströmfläche (110), eine Abströmfläche (112) sowie eine Hauptströmungsrichtung (X1), einen Filterkörper (120) und einen den Filterkörper (120) tragenden Filtereinsatzrahmen (118) aufweist und der Sekundärfiltereinsatz (200) stromabwärts des Hauptfiltereinsatzes (100) angeordnet ist, wobei
der Filtereinsatzrahmen (118) im Bereich der Abströmfläche (112) eine Dichtung (116) zur Trennung des Filtergehäuses (12) in Reinseite und Rohseite und
eine Abstandsstruktur (128) zur Festlegung eines Abstands zwischen dem Filtereinsatzrahmen (118) und dem Sekundärfiltereinsatz (200) aufweist.

12. Filter nach Anspruch 11, wobei das Filtergehäuse (12) eine Einführrichtung (Z) aufweist, die im Wesentlichen senkrecht zur Hauptströmungsrichtung (X1) liegt.

13. Filter nach einem der Ansprüche 11 bis 12, wobei der Sekundärfiltereinsatz (200) eine Dichtung (234) zur Anlage an dem Filtergehäuse aufweist, wobei die Dichtung (234) insbesondere radial zu einer Durchströmungsrichtung (Y1) des Sekundärfiltereinsatzes (200) wirkend ausgelegt ist.

14. Filter nach einem der Ansprüche 11 bis 13, wobei der Sekundärfiltereinsatz (200) einen Sekundärfilterkörper (214) und einen den Sekundärfilterkörper (214) tragenden Sekundärfiltereinsatzrahmen (216) aufweist.

15. Filter nach einem der Ansprüche 13 oder 14, wobei im eingesetzten Zustand des Hauptfiltereinsatzes (100) und des Sekundärfiltereinsatzes (200) die Abstandsstruktur (128) des Hauptfiltereinsatzes (100) die Dichtung oder den Sekundärfiltereinsatzrahmen (218) des Sekundärfiltereinsatzes (200) kontaktiert.

## Claims

1. Filter insert (100) for filtering air, in particular for an internal combustion engine, having an inflow surface (110), an outflow surface (112) as well as a main flow direction (X), a filter body (120) which is designed as a filter bellows and features outer fold edges which lie on the inflow surface, and inner fold edges opposite the outer folded edges and which lie on the outflow surface, wherein the outflow surface is inclined with respect to the inflow surface,
a filter insert frame (118) supporting the filter body (120), wherein the filter insert frame (118) features in the area of the outflow surface (112) a seal (116) for separating a filter interior of a filter (10) into clean side and raw side and
in the area of the inflow surface (110) an edge protection (130) running around the outside of the filter frame (118), wherein the edge protection (130) connects the filter body (120) and the filter insert frame (118) with each other.

2. Filter insert according to claim 1, wherein the edge protection (130) forms a sealed connection for the fluid to be filtered between filter body (120) and filter insert frame (118).

3. Filter insert according to one of the claims 1 or 2, wherein the filter insert frame (118) features in the area of the edge protection (130) recesses (136) filled with the edge protection (130).

4. Filter insert according to claim 3, wherein the recesses (136) extend perpendicularly to the main flow direction (X1).

5. Filter insert according to one of the preceding claims 1 to 4, wherein the filter insert frame (118) surrounds the filter body (120) and defines the main flow direction (X1).

6. Filter insert according to one of the preceding claims 1 to 5, wherein the edge protection (130) partially penetrates the filter body (120).

7. Filter insert according to one of the preceding claims 1 to 6, wherein the filter body (120) is designed with variable fold height.

8. Filter insert according to one of the preceding claims 1 to 7, wherein the outflow surface (112) or/and a sealing surface (114) of the seal (116) enclose with the main flow direction (X1) an angle between 5° and 45°, in particular an angle of 24°±10° and in particular an angle of 24°±5°.

9. Filter insert according to one of the preceding claims 1 to 8, wherein the connection between the filter body (120) and the filter insert frame (118) is an adhesive bond which is formed integrally with the edge protection (130).

10. Filter insert according to claim 9, wherein the adhesive bond and the edge protection (130) are made of the same material, in particular of a polyurethane.

11. Filter (10) for filtering a fluid, in particular air, in particular for an internal combustion engine, having
a filter housing (12) into which a main filter insert (100) according to one of the preceding claims and a secondary filter insert (200) are inserted, wherein the main filter insert (100) features an inflow surface (110), an outflow surface (112) as well as a main flow direction (X1), a filter body (120) and a filter insert frame (118) supporting the filter body (120) and the secondary filter insert (200) is disposed downstream of the main filter insert (100), wherein
wherein the filter insert frame (118) features in the area of the outflow surface (112) a seal (116) for separating the filter housing (12) into clean side and raw side, and
a spacing structure (128) for defining a distance between the filter insert frame (118) and the secondary filter insert (200).

12. Filter according to claim 11, wherein the filter housing (12) features a direction of insertion (Z) which is substantially perpendicular to the main flow direction (X1).

13. Filter according to one of the claims 11 to 12, wherein the secondary filter insert (200) features a seal (234) for resting against the filter housing, wherein the seal (234) is designed to act in particular radially with respect to a throughflow direction (Y1) of the secondary filter insert (200).

14. Filter according to one of the claims 11 to 13, wherein the secondary filter insert (200) features a secondary filter body (214) and a secondary filter insert frame (216) supporting the secondary filter body (214).

15. Filter according to one of the claims 13 or 14, wherein, in the inserted state of the main filter insert (100) and the secondary filter insert (200), the spacing structure (128) of the main filter insert (100) contacts the seal or the secondary filter insert frame (218) of the secondary filter insert (200).

## Revendications

1. Cartouche filtrante (100) pour filtrer de l'air, notamment pour un moteur à combustion interne, avec une surface d'afflux (110), une surface d'écoulement (112) ainsi qu'une direction de flux principale (X), un corps de filtre (120) réalisé sous forme de soufflet de filtre qui présente des arêtes de pliage extérieures reposant sur la surface d'afflux, et des arêtes de pliage intérieures opposées aux arêtes de pliage extérieures et reposant sur la surface d'écoulement, dans laquelle la surface d'afflux est inclinée par rapport à la surface d'écoulement,
un cadre de la cartouche filtrante (118) supportant le corps de filtre (120), dans laquelle le cadre de la cartouche filtrante (118) présente dans la zone de la surface d'écoulement (112) un joint d'étanchéité (116) pour séparer un intérieur de filtre d'un filtre (10) en un côté pur et un côté brut, et
dans la zone de la surface d'afflux (110) une protection d'arête (130) s'étendant à l'extérieur autour du cadre de filtre (118), dans laquelle la protection d'arête (130) relie le corps de filtre (120) et le cadre de la cartouche filtrante (118) l'un à l'autre.

2. Cartouche filtrante selon la revendication 1, dans laquelle la protection d'arête (130) forme une liaison étanche pour le fluide à filtrer entre le corps de filtre (120) et le cadre de la cartouche filtrante (118).

3. Cartouche filtrante selon l'une des revendications 1 ou 2, dans laquelle le cadre de la cartouche filtrante (118) présente dans la zone de la protection d'arête (130) des évidements (136) remplis par la protection d'arête (130).

4. Cartouche filtrante selon la revendication 3, dans laquelle les évidements (136) s'étendent perpendiculairement par rapport à la direction de flux principale (X1).

5. Cartouche filtrante selon l'une des revendications 1 à 4 précédentes, dans laquelle le cadre de la cartouche filtrante (118) entoure le corps de filtre (120) et définie la direction de flux principale (X1).

6. Cartouche filtrante selon l'une des revendications 1 à 5 précédentes, dans laquelle la protection d'arête (130) pénètre le corps de filtre (120) partiellement.

7. Cartouche filtrante selon l'une des revendications 1 à 6 précédentes, dans laquelle le corps de filtre (120) est réalisé avec une hauteur de plis variable.

8. Cartouche filtrante selon l'une des revendications 1 à 7 précédentes, dans laquelle la surface d'écoulement (112) ou/et une surface d'étanchéité (114) du joint d'étanchéité (116) forme avec la direction de flux principale (X1) un angle entre 5° et 45°, notamment un angle de 24°±10° et notamment un angle de 24°±5°.

9. Cartouche filtrante selon l'une des revendications 1 à 8 précédentes, dans laquelle la liaison entre le corps de filtre (120) et le cadre de la cartouche filtrante (118) est une liaison adhésive qui est formée d'un seul tenant avec la protection d'arête (130).

10. Cartouche filtrante selon la revendication 9, dans laquelle la liaison adhésive et la protection d'arête (130) sont formées du même matériau, notamment d'un polyuréthane.

11. Filtre (10) pour filtrer un fluide, notamment de l'air, notamment pour un moteur à combustion interne, avec
un boîtier de filtre (12), dans lequel sont insérées une cartouche filtrante principale (100) selon l'une des revendications précédentes et une cartouche filtrante secondaire (200), dans lequel la cartouche filtrante principale (100) présente une surface d'afflux (110), une surface d'écoulement (112) ainsi qu'une direction de flux principale (X1), un corps de filtre (120) et un cadre de la cartouche filtrante (118) supportant le corps de filtre (120) et la cartouche filtrante secondaire (200) est disposée en aval de la cartouche filtrante principale (100), dans lequel le cadre de la cartouche filtrante (118) présente dans la zone de la surface d'écoulement (112) un joint d'étanchéité (116) pour séparer le boîtier de filtre (12) en un côté pur et un côté brut, et
une structure d'écartement (128) pour définir une distance entre le cadre de la cartouche filtrante (118) et la cartouche filtrante secondaire (200).

12. Filtre selon la revendication 11, dans lequel le boîtier de filtre (12) présente une direction d'insertion (Z) qui est sensiblement perpendiculaire à la direction de flux principale (X1).

13. Filtre selon l'une des revendications 11 à 12, dans lequel la cartouche filtrante secondaire (200) présente un joint d'étanchéité (234) pour s'appuyer contre le boîtier de filtre, dans lequel le joint d'étanchéité (234) est conçu pour agir notamment radialement par rapport à une direction d'écoulement (Y1) de la cartouche filtrante secondaire (200).

14. Filtre selon l'une des revendications 11 à 13, dans lequel la cartouche filtrante secondaire (200) présente un corps de filtre secondaire (214) et un cadre de la cartouche filtrante secondaire (216) supportant le corps de filtre secondaire (214).

15. Filtre selon l'une des revendications 13 ou 14, dans lequel, à l'état inséré de la cartouche filtrante principale (100) et de la cartouche filtrante secondaire (200), la structure d'écartement (128) de la cartouche filtrante principale (100) est en contact avec le joint d'étanchéité ou le cadre de la cartouche filtrante secondaire (218) de la cartouche filtrante secondaire (200).
